# EUROPEAN PATENT APPLICATION

(11) **EP 1 788 753 A1**
(43) Date of publication of application: **23.05.2007**
(21) Application number: 05783162.0
(22) Date of filing: 13.09.2005
(51) Int. Cl.: H04L 12/56, H04L 12/46, H04L 12/66, H04M 11/00

(54) **ELECTRIC DEVICE, SERVER APPARATUS, MOBILE TERMINAL, COMMUNICATION SYSTEM, COMMUNICATION METHOD AND PROGRAM**

(30) Priority: 22.09.2004 JP 2004275948
(71) Applicant: MATSUSHITA ELECTRIC INDUSTRIAL CO., LTD., Osaka 571-8501 (JP)
(72) Inventor: KANEKO, Tomoharu c/o Matsushita Electric Industrial Ltd, Shiromi 1-chome, Chuo-ku, Osaka-shi Osaka 540-6319 (JP); KITO, Tsutomu c/o Matsushita Electric Industrial Ltd, Shiromi 1-chome, Chuo-ku, Osaka-shi Osaka 540-6319 (JP); AOYAMA, Yasuhiro c/o Matsushita Electric Industrial Ltd, Shiromi 1-chome, Chuo-ku, Osaka-shi Osaka 540-6319 (JP); IWAMA, Tomohiro c/o Matsushita Electric Industrial Ltd, Shiromi 1-chome, Chuo-ku, Osaka-shi Osaka 540-6319 (JP)
(74) Representative: Grünecker, Kinkeldey, Stockmair & Schwanhäusser Anwaltssozietät
(86) International application number: PCT/JP2005/016820
(87) International publication number: WO 2006/033264

(57) **Abstract**

There are disclosed a server apparatus, an electric device, a mobile terminal and so on that reduce the processing load of a server and also reduce the bands used for access lines connected by the server to the Internet. According to the apparatus, an electric device (101) receiving an invocation request from a mobile terminal (105) changes the settings of an NAT router (102) and acquires and transmits information of the setting as changed and an Internet side global IP address of the NAT router (102) to the mobile terminal (105), which uses these information to transmit a P2P session establishment request to the electric device (101), thereby establishing a session between the mobile terminal (105) and the electric device (101).

## Description

### Technical Field

The present invention relates to an electrical appliance, server apparatus, mobile terminal, communication system, communication method, and program.

### Background Art

In recent years, the popularity of the continuous connection environment of the Internet has continued to grow, enabling connection of various electrical appliances to networks. These business and home network environments (hereinafter "private networks") typically connect to the Internet by a router having a NAT (Network Address Translation)/NAPT (Network Address Port Translation) function.

With this type of private network, it is possible to start connection to a server that exists on the Internet from an electrical appliance, but conversely it is not possible to start connection to an electrical appliance from a server. This is primarily because the address assigned to the electrical appliance can dynamically change, making it difficult for the communication partner to identify the address.

In addition, when the NAT router obtains a packet addressed to the electrical appliance from the Internet, control information (address/port conversion table) for properly transferring the obtained packet to the electrical appliance needs to be set in the NAT router.

Technology for such problems is disclosed in Patent Document 1. In Patent Document 1, a connection support server having a global IP address is provided on the Internet and, because connection to the connection support server on the Internet from the electrical appliance is made based on a global IP address, the electrical appliance can establish a TCP session with and connect to the connection support server.

On the other hand, in cases where connection to an electrical appliance is made from a host, when the host connects to the connection support server based on a global IP address and transmits an electrical appliance connection request to the connection support server, the connection support server relays the session established with the electrical appliance and the session established with the host. Thus, communication between the electrical appliance and the host is realized.
Patent Document 1: Japanese Patent Application Laid-Open No.2003-169075

### Disclosure of the Invention

### Problems to be Solved by the Invention

Nevertheless, with the technology disclosed in the above-mentioned Patent Document 1, when high volume data is transmitted and received between the host and electrical appliance, the processing load of the server significantly rises causing the used band of the access line the server connects to the Internet to increase, making it impossible to provide service to a plurality of users.

It is therefore an object of the present invention to provide an electrical appliance, server apparatus, mobile terminal, communication system, communication method, and program that reduces the processing load of the server and reduces the used band of the access line the server connects to the Internet.

### Means for Solving the Problem

The electrical appliance of the present invention comprises an Internet connection function and employs a configuration having a NAT control section that ensures arrival of a packet addressed to the electrical appliance by controlling a NAT router that interconverts a global IP address and private address, and obtains NAT router setting information and global IP address, and a NAT setting information notification section that notifies a server apparatus on the Internet of the NAT router setting information and global IP address obtained by the NAT control section.

The electrical appliance of the present invention comprises an Internet connection function and employs a configuration having a call reception section that receives call requests from a server apparatus on the Internet, a NAT control section that ensures, upon receiving a call request by the call reception section, arrival of a packet addressed to the electrical appliance by controlling a NAT router that interconverts a global IP address and private address, and obtains NAT router setting information and global IP address, and a NAT setting information notification section that notifies the server apparatus of the NAT router setting information and global IP address obtained by the NAT control section.

The server apparatus of the present invention employs a configuration having a call control section that calls an electrical appliance upon receiving an electrical appliance call request from a mobile terminal, a receiving section that receives a NAT router setting information and global IP address transmitted from the electrical appliance, and a notification section that notifies the mobile terminal that issued the electrical appliance call request of the NAT router setting information and global IP address received by the receiving section.

The mobile terminal of the present invention employs a configuration having a call request transmission section that transmits to a server apparatus in which a session is established a connection request to an electrical appliance, a receiving section that receives from the server apparatus the NAT router setting information and global IP address notified to the server apparatus by the electrical appliance, and a connection control section that transmits a connection request to the electrical appliance using the NAT router setting information and global IP address received by the receiving section.

The communication method of the present invention comprises a NAT control step wherein an electrical appliance that receives a call request from a mobile terminal ensures arrival of a packet addressed to the electrical appliance by controlling a NAT router that interconverts a global IP address and private address and obtains NAT router setting information and global IP address, a NAT setting information notification step wherein a server apparatus on the Internet is notified of the NAT router setting information and global IP address obtained in the NAT control step, a notification step wherein the server apparatus notifies the mobile terminal that issued the electrical appliance call request of the NAT router setting information and global IP address, and a connection control step wherein the mobile terminal transmits a connection request to the electrical appliance using the NAT router setting information and global IP address.

The communication system of the present invention employs a configuration having an electrical appliance comprising a NAT control section that ensures, upon receiving a call request from a mobile terminal, arrival of a packet addressed to the electrical appliance by controlling a NAT router that interconverts a global IP address and private address, and obtains the NAT router setting information and global IP address, and a NAT setting information notification section that notifies a server apparatus on the Internet of the NAT router setting information and global IP address obtained by the NAT control section; a server apparatus comprising a first receiving section that receives the NAT router setting information and global IP address notified by the electrical appliance, and a notification section that notifies the mobile terminal that issued the electrical appliance call request of the NAT router setting information and global IP address received by the first receiving section, and a mobile terminal comprising a second receiving section that receives from the server apparatus the NAT router setting information and global IP address notified by the server apparatus, and a connection control section that transmits a connection request to the electrical appliance using the NAT router setting information and global IP address received by the second receiving section.

The program of the present invention employs a configuration that makes the computer provided in an electrical appliance function as a NAT control section that ensures arrival of a packet addressed to the electrical appliance by controlling a NAT router that interconverts a global IP address and private address and obtains NAT router setting information and global IP address, and a NAT setting information notification section that notifies a server apparatus on the Internet of the NAT router setting information and global IP address obtained by the NAT control section.

The program of the present invention employs a configuration that makes the computer provided in a server apparatus function as a call control section that calls an electrical appliance upon receiving an electrical appliance call request from a mobile terminal, a receiving section that receives a NAT router setting information and global IP address transmitted from the electrical appliance, and a notification section that notifies the mobile terminal that issued the electrical appliance call request of the NAT router setting information and global IP address received by the receiving section.

The program of the present invention employs a configuration that makes the computer provided in a mobile terminal function as a call request transmission section that transmits an electrical appliance connection request to a server apparatus in which a session is established, a receiving section that receives from the server apparatus the NAT router setting information and global IP address notified to the server apparatus by the electrical appliance, and a connection control section that transmits a connection request to the electrical appliance using the NAT router setting information and global IP address received by the receiving section.

### Advantageous Effect of the Invention

The present invention provides an electrical appliance, server apparatus, mobile terminal, communication system, communication method, and program that reduces the processing load of the server and reduces the used band of the access line the server connects to the Internet.

### Brief Description of Drawings

FIG.1 is a schematic diagram showing the configuration of the communication system according to Embodiment 1 of the present invention;
FIG.2 is a block diagram showing the configuration of the electrical appliance shown in FIG.1;
FIG.3 is a block diagram showing the configuration of the server apparatus shown in FIG.1;
FIG.4 is a block diagram showing the configuration of the mobile terminal shown in FIG.1;
FIG.5 is a sequence diagram showing the P2P connection process of the communication system shown in FIG.1;
FIG.6 is a block diagram showing the configuration of the mobile terminal according to Embodiment 2 of the present invention;
FIG.7 is a block diagram showing the configuration of the mobile terminal according to Embodiment 3 of the present invention;
FIG.8 is a block diagram showing the configuration of the mobile terminal according to Embodiment 4 of the present invention;
FIG.9 is a block diagram showing the configuration of the mobile terminal according to Embodiment 5 of the present invention; and
FIG.10 is a block diagram showing the configuration of the mobile terminal according to Embodiment 6 of the present invention.

### Best Mode for Carrying Out the Invention

Now, embodiments of the present invention will be described in detail with reference to the accompanying drawings. The embodiments are described assuming that the mobile telephone (hereinafter "mobile terminal") is provided with an Internet connection function and is capable of mail transmission/reception and web browsing. Furthermore, embodiments with configurations comprising the same functions are given the same numerals and duplicate descriptions thereof are omitted.

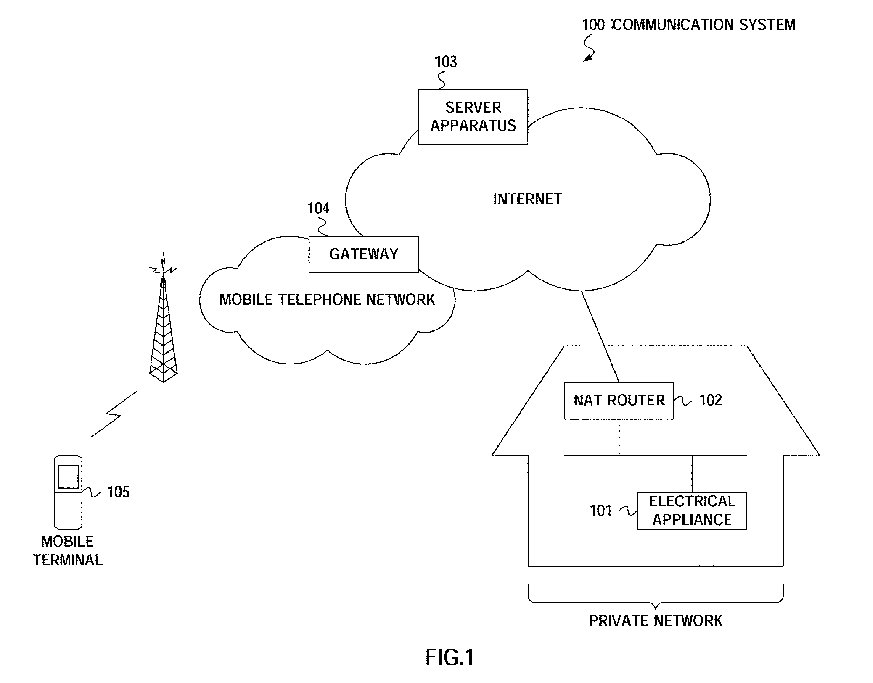

(Embodiment 1)
In communication system 100 according to Embodiment 1 of the present invention, as shown in FIG.1, primarily the Internet and a mobile telephone network are connected by gateway 104, and the Internet and a private network are connected. The private network comprises components such as electrical appliance 101 and NAT router 102.

Electrical appliance 101 is typically referred to as an Internet appliance, and is a home electrical product comprising an Internet connection function and is connected to NAT router 102. In addition, electrical appliance 101 may also be connected to other electrical appliances (not shown).

NAT router 102 is connected to electrical appliance 101 and relays the connection between electrical appliance 101 and the Internet by assigning a private address to the connected electrical appliance 101 and interconverting the global IP address assigned to the private network and the private address. NAT router 102 sometimes exist transparently in the transmission and reception between electrical appliance 101 and server apparatus 103 on the Internet, making it seem as though electrical appliance 101 and server apparatus 103 perform direct communication. For this reason, in the following descriptions, NAT router 102 is sometimes omitted.

Server apparatus 103 is provided on the Internet, establishes sessions with a plurality of electrical appliances, and maintains and controls established sessions. In addition, server apparatus 103 establishes a session with mobile terminal 105.

Gateway 104 converts the protocol and address of packets transmitted and received by mobile terminal 105, and establishes a session and realizes data communication with server apparatus 103 from mobile terminal 105.

Mobile terminal 105 wirelessly connects with the mobile telephone network, establishes a session with server apparatus 103 that established a session with electrical appliance 101, and obtains information related to the private network via server apparatus 103. Then, based on the obtained information, mobile terminal 105 performs direction connection (referred to as peer to peer or P2P, hereinafter "P2P") communication with electrical appliance 101.

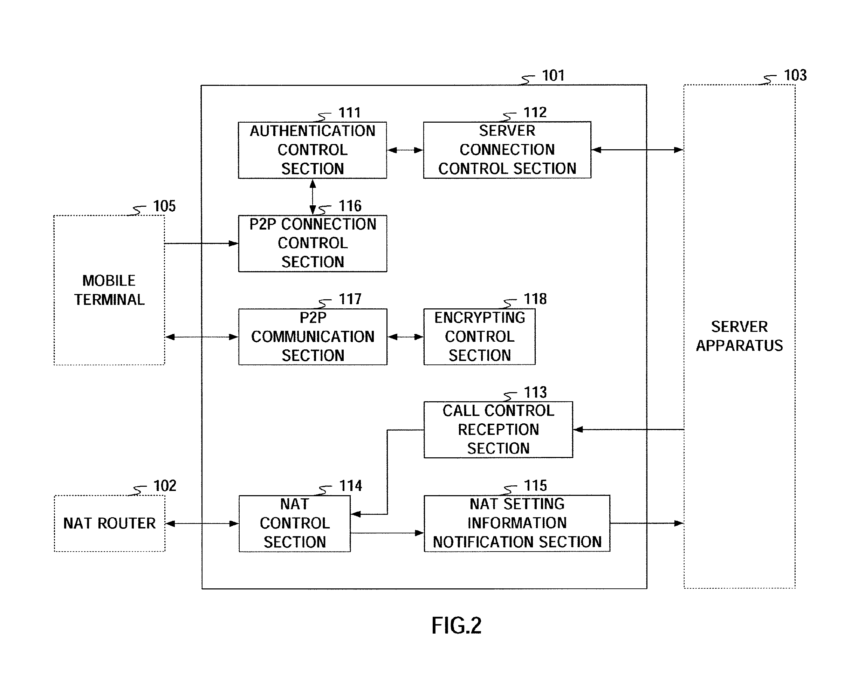

FIG.2 is a block diagram showing the internal configuration of electrical appliance 101 shown in FIG. 1 . In this figure, authentication control section 111 controls authentication information including an ID, password, and public key certificate, and outputs the authentication information to server connection control section 112 and P2P connection control section 116. In addition, authentication control section 111 verifies the authentication information output from server connection control section 112 and P2P connection control section 116. Thus, the security of the communication between server apparatus 103 and mobile terminal 105 is improved.

Server connection control section 112 transmits the authentication information output from authentication control section 111 along with a session establishment request to server apparatus 103, and outputs the authentication information transmitted from server apparatus 103 to authentication control section 111.

Call control reception section 113 receives a call request from server apparatus 103 and notifies NAT control section 114 that a call request was received.

NAT control section 114 receives notification of receipt of the call request from server apparatus 103 and changes the settings of NAT router 102 to ensure arrival of the packet addressed to a certain port number to electrical appliance 101 from the Internet. In addition, the global IP address on the Internet side of NAT router 102 is obtained. The specific settings for NAT router 102 and specific procedure for obtaining the global IP address are based on a method such as the UPnP (Universal Plug and Play). The setting information and global IP address of NAT router 102 (hereinafter simply "address information") is notified to server apparatus 103 via NAT setting information notification section 115.

Furthermore, rather than controlling NAT router 102 by electrical appliance 101, when the user sets NAT router 102 and registers the setting information in electrical appliance 101 in advance, the registered setting information of NAT router 102 may be notified to server apparatus 103 upon receiving a call request.

Upon receiving the authentication information along with a session establishment request from mobile terminal 105, P2P connection control section 116 outputs the received authentication information to authentication control section 111, and obtains the authentication result from authentication control section 111. When the authentication results indicate authentication success, P2P connection control section 116 establishes a session with mobile terminal 105. On the other hand, when the authentication results indicate authentication failure, P2P connection control section 116 does not establish a session with mobile terminal 105.

When a session with mobile terminal 105 is established, P2P communication section 117 performs direct data transmission and reception with mobile terminal 105 and realizes P2P communication.

Encrypting control section 118 controls the encrypting and decrypting of the data transmitted and received to and from mobile terminal 105 by P2P communication section 117, and realizes encrypted communication between P2P communication section 117 and mobile terminal 105. Thus, the security of P2P communication with mobile terminal 105 is improved. Furthermore, P2P communication section 117 and encrypting control section 118 function as encrypted communication section.

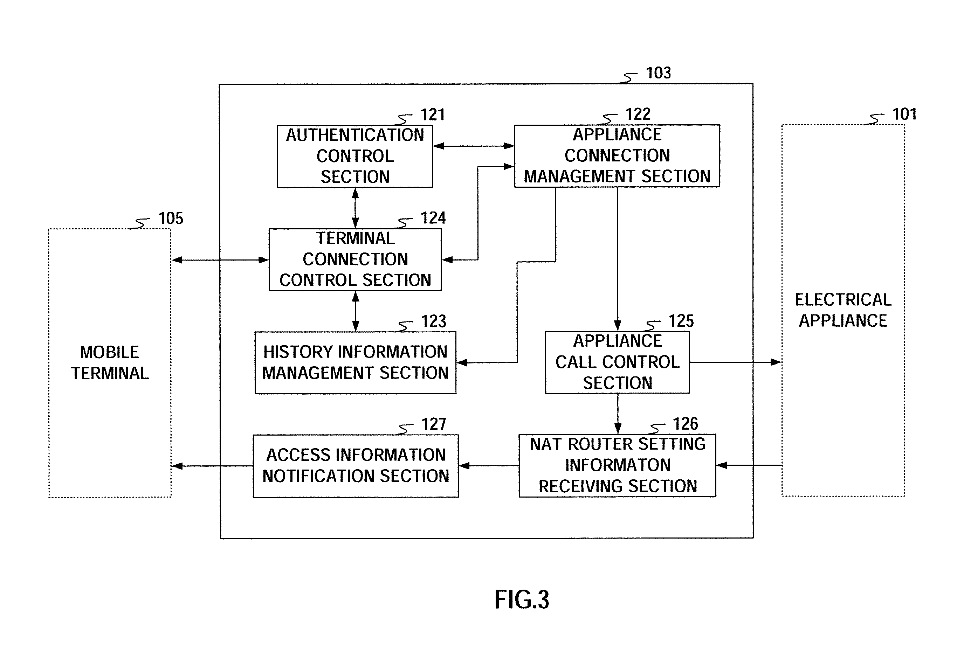

FIG.3 is a block diagram showing the internal configuration of server apparatus 103 shown in FIG.1. In this figure, authentication control section 121 controls authentication information including an ID, password, and public key certificate, and outputs the authentication information to appliance connection management section 122 and terminal connection control section 124. In addition, authentication control section 121 verifies the authentication information output from appliance connection management section 122 and terminal connection control section 124. Thus, the security of the communication between electrical appliance 101 and mobile terminal 105 is improved.

Appliance connection management section 122 receives the authentication information along with a session establishment request from electrical appliance 101, and notifies authentication control section 121 of the received authentication information. Appliance connection management section 122 establishes a session with electrical appliance 101 when the authentication results of authentication control section 121 indicate authentication success, and does not establish a session with electrical appliance 101 when the authentication results indicate authentication failure. When the session is established, authentication control section 121 notifies history information management section 123 of session establishment.

History information management section 123 stores, and manages, which electrical appliance is associated with the session established by appliance connection management section 122 and the address of the electrical appliance.

Terminal connection control section 124 receives the authentication information along with the session establishment request from mobile terminal 105, and notifies authentication control section 121 of the received authentication information. Terminal connection control section 124 establishes a session with mobile terminal 105 when the authentication results of authentication control section 121 indicate authentication success, and does not establish a session with mobile terminal 105 when the authentication results indicate authentication failure. When a session is established, terminal connection control section 124 accesses history information management section 123, selects the electrical appliance for which mobile terminal 105 requested P2P communication, and notifies appliance call control section 125 of the selected electrical appliance via appliance connection control section 122.

Appliance call control section 125 notifies electrical appliance 101 and NAT router setting information receiving section 126 of the call request from mobile terminal 105, and NAT router setting information receiving section 126 receives the setting information and address information of NAT router 102 from electrical appliance 101.

The setting information and address information of NAT router 102 received by NAT router setting information receiving section 126 is transmitted to mobile terminal 105 via access information notification section 127. Furthermore, access information notification section 127 may process the setting information and address information of NAT router 102 into URL (Uniform Resource Locator) format and transmit the information to mobile terminal 105.

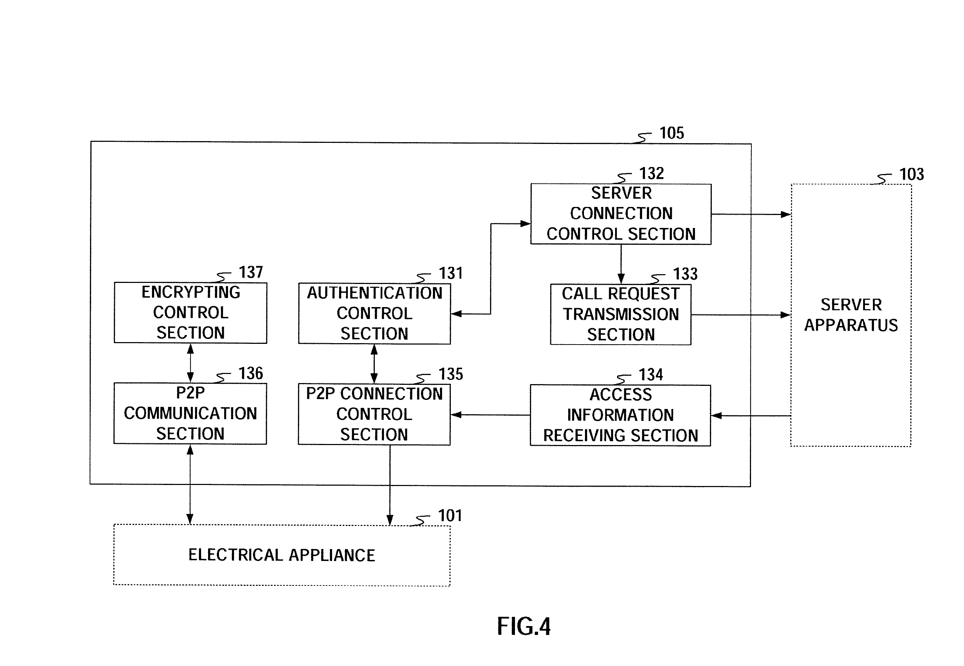

FIG.4 is a block diagram showing the internal configuration of mobile terminal 105 shown in FIG.1. In this figure, authentication control section 131 controls authentication information including an ID, password, and public key certificate, and outputs the authentication information to server connection control section 132 and P2P connection control section 135. In addition, authentication control section 131 verifies the authentication information output from server connection control section 132 and P2P connection control section 135. Thus, the security of the communication between electrical appliance 101 and server apparatus 103 is improved.

When an electrical appliance 101 connection request occurs, server connection control section 132 transmits a session establishment request to server apparatus 103 and notifies call request transmission section 133 of the transmitted session establishment request.

Basedon the content notified by server connection control section 132, call request transmission section 133 issues the desired electrical appliance call request to server apparatus 103.

Access information receiving section 134 receives the setting information and address information of NAT router 102 from server apparatus 103, and outputs the received setting information and address information to P2P connection control section 135.

P2P connection control section 135 transmits a session establishment request to electrical appliance 101 using the setting information and address information of NAT router 102 output from access information receiving section 134. Furthermore, when access information receiving section 134 receives the setting information and address information of NAT router 102, P2P connection control section 135 may be autonomously activated or activated after the user has been notified of the status and user instructions have been received.

When a session with mobile terminal 105 is established, P2P communication section 136 performs direct data transmission and reception with mobile terminal 105, realizing P2P communication.

Encrypting control section 137 controls the encrypting and decrypting of the data transmitted and received to and from mobile terminal 105 by P2P communication section 136, thereby realizing encrypted communication between P2P communication section 136 and mobile terminal 105. Thus, the security of P2P communication with electrical appliance 101 is improved. Furthermore, P2P communication section 136 and encrypting control section 137 function as encrypted communication section.

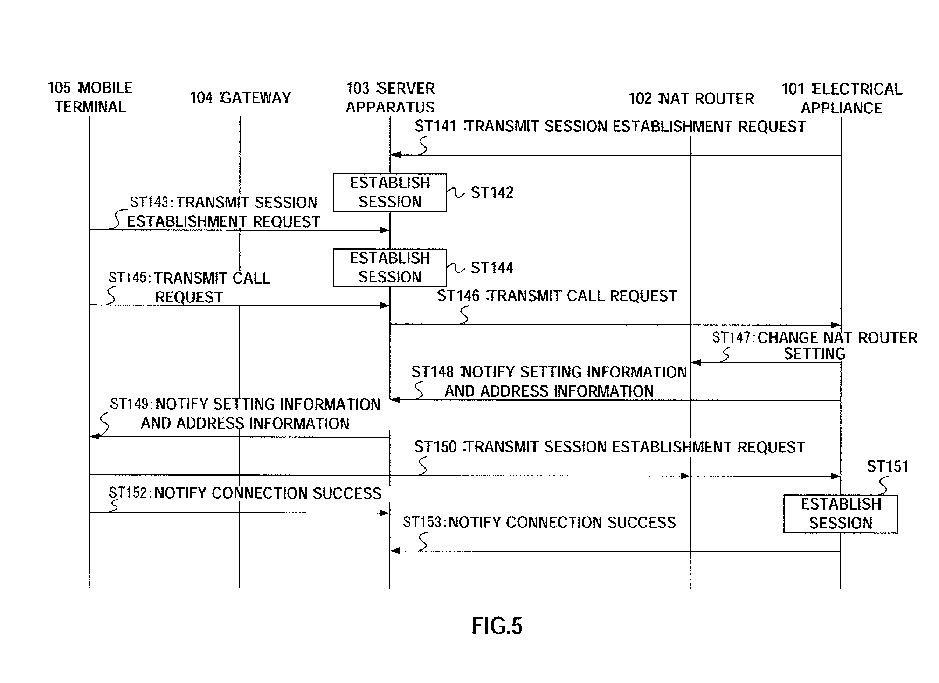

Next, the P2P connectionprocess of communication system 100 having the above-mentioned configuration will be described with reference to FIG.5. In FIG.5, server connection control section 112 of electrical appliance 101 transmits a session establishment request to server apparatus 103 in step (hereinafter "ST") 141, and appliance connection management section 122 of server apparatus 103 establishes a session with electrical appliance 101 in response to the session establishment request transmitted from electrical appliance 101 in ST142.

Server connection control section 132 of mobile terminal 105 transmits a session establishment request to server apparatus 103 in ST143, and terminal connection control section 124 of server apparatus 103 establishes a session with mobile terminal 105 in response to the session establishment request transmitted from mobile terminal 105 in ST144.

Call request transmission section 133 of mobile terminal 105 issues an electrical appliance 101 call request to server apparatus 103 in ST145, and appliance call control section 125 of server apparatus 103 transmits a call request from mobile terminal 105 to electrical appliance 101 in ST146.

Call control reception section 113 of electrical appliance 101 receives the call request from server apparatus 103, and NAT control section 114 changes the settings of NAT router 102 and obtains the setting information and address information of NAT router 102 in ST147.

NAT setting information notification section 115 of electrical appliance 101 notifies server apparatus 103 of the setting information and address information of NAT router 102 in ST148, and access information notification section 127 of server apparatus 103 notifies mobile terminal 105 of the setting information and address information of NAT router 102 in ST149.

Access information receiving section 134 of mobile terminal 105 receives the NAT setting information and address information and P2P connection control section 135 transmits a session establishment request to electrical appliance 101 via NAT router 102 in ST150, and a session is established between mobile terminal 105 and electrical appliance 101 in ST151. Furthermore, the transport protocol used for P2P session establishment is either TCP (Transmission Control Protocol) or UDP (User Datagram Protocol) set in NAT router 102. Here, the transport protocol set in NAT router 102 may be specified in advance by mobile terminal 105 at the time the call request is transmitted in ST145, or may be notified to mobile terminal 105 along with the setting information in ST148 and ST149. As an upper layer of the transport protocol, HTTP (HyperText Transfer Protocol) maybe used. When HTTP is used, HTML documents and image, audio, video, and other files associated with the document can be transmitted and received between the mobile terminal and electrical appliance.

Mobile terminal 105 notifies server apparatus 103 of successful P2P connection with electrical appliance 101 in ST152, and electrical appliance 101 notifies server apparatus 103 of successful P2P connection with mobile terminal 105 in ST153. History information management section 123 of server apparatus 103 may register the successful connection as history information. Here, history information includes, for example, user information and the time of successful connection.

When P2P communication ends between mobile terminal 105 and electrical appliance 101, P2P connection control section 135 of mobile terminal 105 and P2P connection control section 116 of electrical appliance 101 disconnect the session. Mobile terminal 105 and electrical appliance 101 each notify server apparatus 103 that P2P communication has ended and register connection termination as history information in history information management section 123 of server apparatus 103. Here, history information includes, for example, user information and the time the connection ended.

Thus, according to Embodiment 1, an electrical appliance that receives a call request from a mobile terminal changes the settings of the NAT router, obtains the changed setting information and NAT router Internet side global IP address (address information), and transmits the setting information and address information to the mobile terminal, and the mobile terminal transmits a P2P session establishment request using this information, thereby establishing a session between the mobile terminal and electrical appliance and communicating without server apparatus mediation. Therefore, it is possible to reduce the processing load of the server apparatus and also reduce the used band of the access line the server apparatus connects to the Internet.

Furthermore, the session between the electrical appliance and server apparatus may be established at the time the power of the electrical appliance is turned on.

In addition, while the present embodiment described a case where a call request is transmitted from the mobile terminal after a session is established between the electrical appliance and server apparatus, the session between the electrical appliance and server apparatus may be established after the call request from the mobile terminal has been transmitted.

(Embodiment 2)

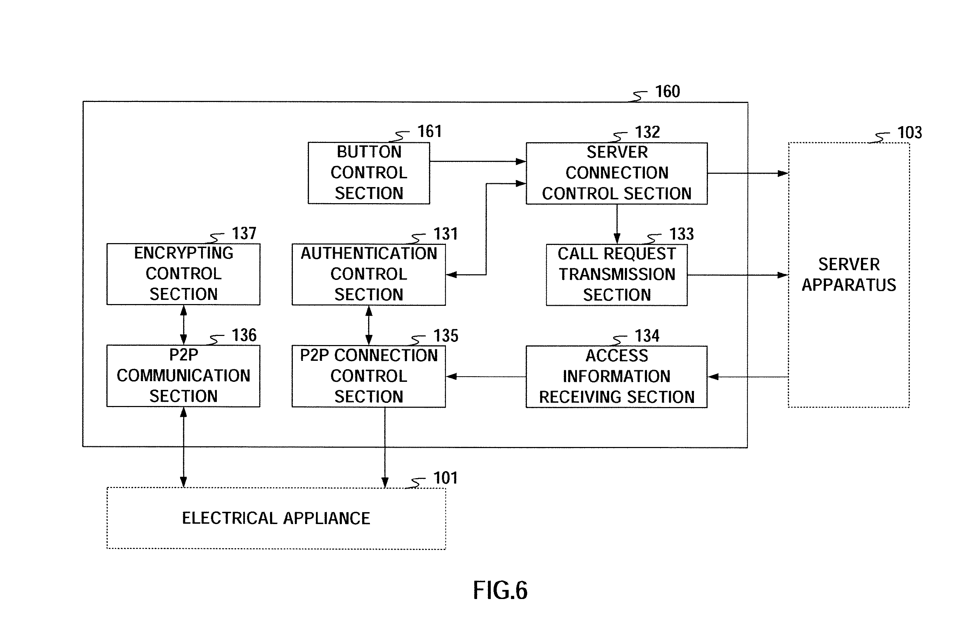

FIG.6 is a block diagram showing the configuration of mobile terminal 160 according to Embodiment 2 of the present invention. The difference between FIG.6 and FIG.4 is the added button control section 161. Mobile terminal 160 according to the present embodiment is provided with a specific button (not shown), and when the user presses the specific button, button control section 161 detects that the specific button was pressed.

Upon detecting the pressing of the specific button, button control section 161 controls server connection control section 132 so as to start a P2P connection process with electrical appliance 101.

Thus, a P2P connection is made with electrical appliance 101 by simply pressing the specific button based on timing desired by the user.

(Embodiment 3)

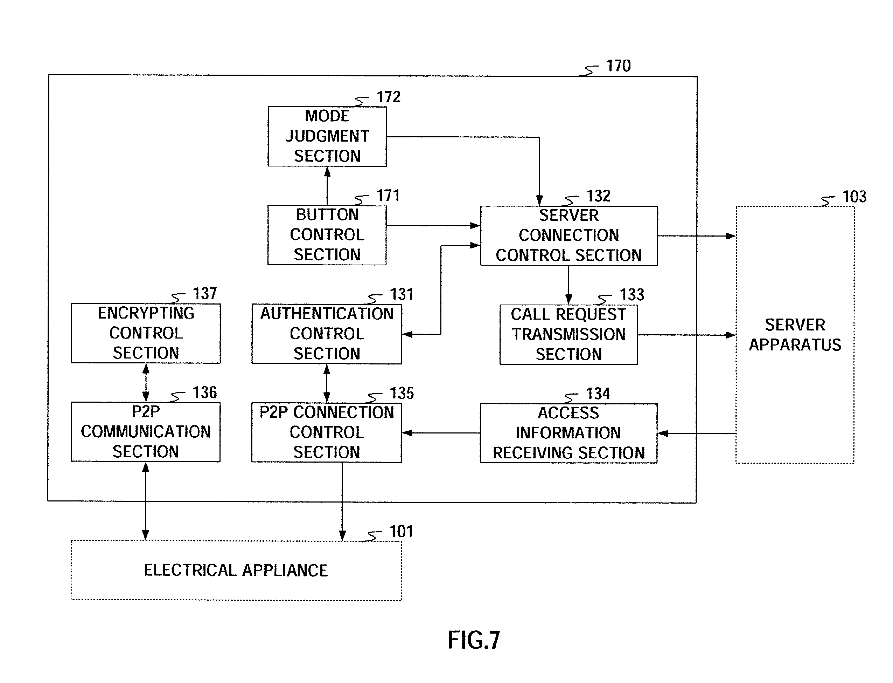

FIG.7 is a block diagram showing the configuration of mobile terminal 170 according to Embodiment 3 of the present invention. The difference between FIG.7 and FIG.4 is the added button control section 171 and mode judgment section 172. Mobile terminal 170 according to the present embodiment has a mode in which a function for connecting mobile terminal 170 to electrical appliance 101 operates and a mode in which a telephone function operations.

Button control section 171 detects when a button, such as a numerical button for dialing, typically provided on mobile terminal 170 is pressed by the user, and notifies mode judgment section 172 and server connection control section 132 that the button was pressed.

Upon receiving notification from button control section 171 that the button was pressed, mode judgment section 172 judges the mode of mobile terminal 170. Mode judgment section 172 controls server connection control section 132 so as to start a P2P connection process with electrical appliance 101 if the mode is judged as the mode in which a function for connecting to electrical appliance 101 operates, or does not perform the process that starts the P2P connection process with electrical appliance 101 if the mode is judged as the mode in which a telephone function operates.

Thus, the same button is used as a common button for a plurality of modes, thereby implementing a miniaturization of mobile terminal 170.

Furthermore, if the button typically provided on mobile terminal 170 is, for example, a numerical button for dialing, specific electrical appliances may by made to correspond to each of the buttons 0 to 9, respectively, in advance.

(Embodiment 4)

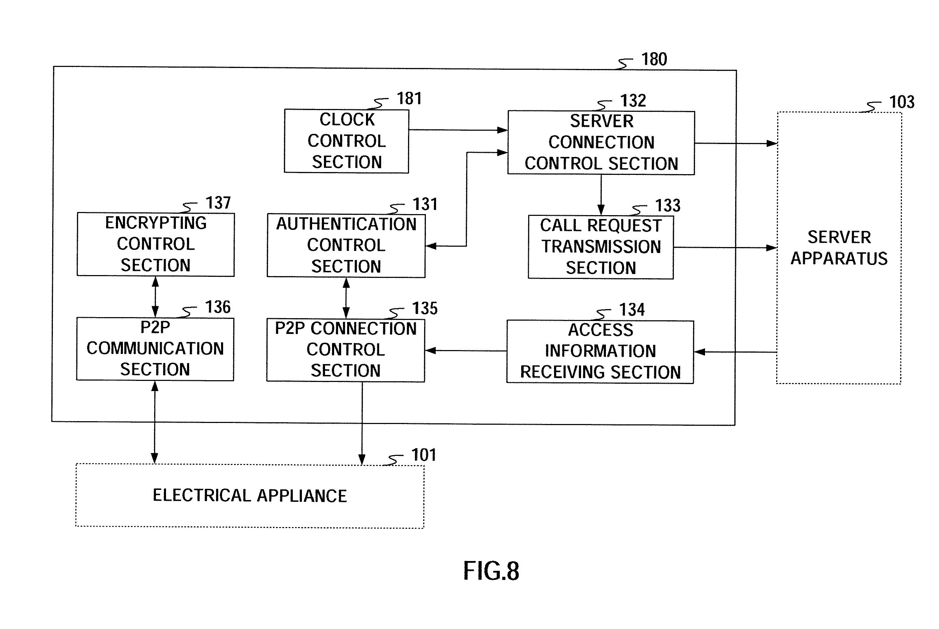

FIG.8 is a block diagram showing the configuration of mobile terminal 180 according to Embodiment 4 of the present invention. The difference between FIG.8 and FIG.4 is the added clock control section 181.

Clock control section 181 stores a time set by the user and, when the set time is reached, controls server connection control section 132 so as to start a P2P connection process with electrical appliance 101.

Thus, a P2P connection is automatically made with electrical appliance 101 at a time set in advance by the user.

(Embodiment 5)

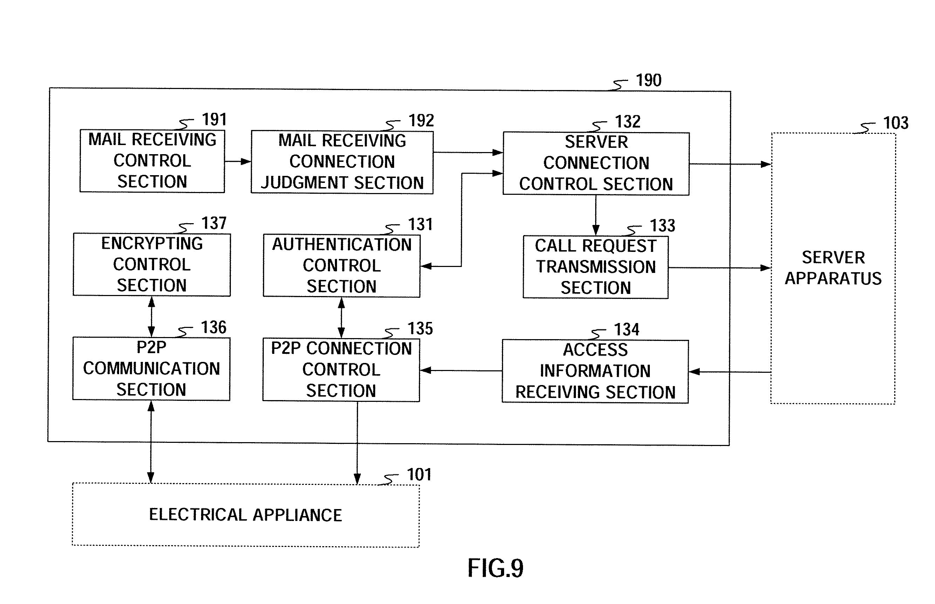

FIG.9 is a block diagram showing the configuration of mobile terminal 190 according to Embodiment 5 of the present invention. The difference between FIG.9 and FIG.4 is the added mail receiving control section 191 and mail receiving connection judgment section 192.

Mail receiving control section 191 receives a mail addressed to mobile terminal 190 and outputs the received mail to mail receiving connection judgment section 192.

Mail receiving connection judgment section 192 judges whether or not a P2P connection is to be made with electrical appliance 101 based on the content of the mail output from mail receiving control section 191, such as the sender, a specific character string included in the title, or a specific command. Upon judging that connection is to be made, mail receiving connection judgment section 192 controls server connection control section 132 so as to start a P2P connection process with electrical appliance 101.

Thus, a P2P connection is automatically made with electrical appliance 101 by simply receiving a mail with content applicable to conditions preset by the user.

(Embodiment 6)

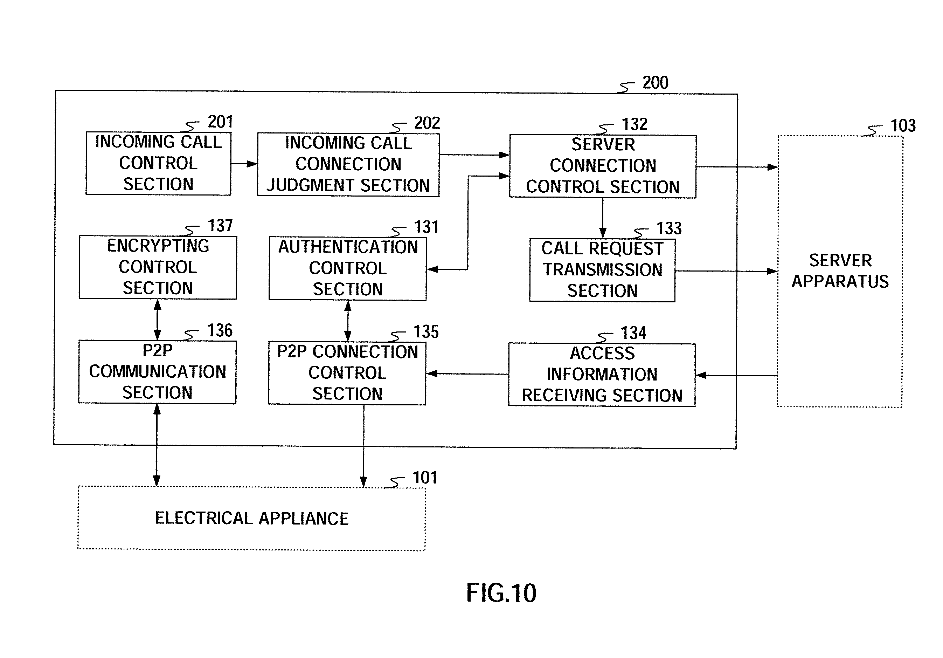

FIG.10 is a block diagram showing the configuration of mobile terminal 200 according to Embodiment 6 of the present invention. The difference between FIG.10 and FIG.4 is the added incoming call control section 201 and incoming call connection judgment section 202.

Upon receiving an incoming call onmobile terminal 200, incoming call control section 201 controls the incoming call and incoming call connection judgment section 202 judges whether or not a P2P connection is to be made with electrical appliance 101 based on, for example, the received call source information (originating number). Upon judging that connection is to be made, server connection control section 132 is controlled so as to start a P2P connection process with electrical appliance 101.

Thus, a P2P connection is automatically made with electrical appliance 101 by simply receiving an incoming call applicable to the source information preset by the user.

This concludes the description of the embodiments of the present invention.

A first aspect of the present invention is an electrical appliance comprising an Internet connection function and employing a configuration having a NAT control section that ensures arrival of a packet addressed to the electrical appliance by controlling a NAT router that interconverts a global IP address and private address, and obtains NAT router setting information and global IP address, and a NAT setting information notification section that notifies a server apparatus on the Internet of the NAT router setting information and global IP address obtained by the NAT control section.

A second aspect of the present invention is an electrical appliance comprising an Internet connection function and employing a configuration having a call reception section that receives call requests from a server apparatus on the Internet, a NAT control that ensures, upon receiving a call request by the call reception section, arrival of a packet addressed to the electrical appliance by controlling a NAT router that interconverts a global IP address and private address, and obtains NAT router setting information and global IP address, and a NAT setting information notification section that notifies the server apparatus of the NAT router setting information and global IP address obtained by the NAT control section.

According to these configurations, even if the address assigned to the electrical appliance by the NAT router dynamically changes, the electrical appliance ensures the arrival of a packet addressed to the electrical appliance by controlling the NAT router, obtains the NAT router setting information and global IP address, and notifies a server apparatus on the Internet of the NAT router setting information and global IP address, thereby making it possible for a mobile terminal that obtains via the server apparatus the NAT router setting information and global IP address to directly connect to the electrical appliance using this information.

A third aspect of the present invention is an electrical appliance in accordance with the above-mentionedaspectswhereintheelectricalappliance further comprises an authentication control section that controls authentication when connecting with the server apparatus.

According to this configuration, the electrical appliance improves the security of communication with the server apparatus by performing authentication control when connecting with the server apparatus.

A fourth aspect of the present invention is an electrical appliance in accordance with the above-mentioned aspects wherein the electrical appliance further comprises an authentication control section that controls authentication when connecting with a mobile terminal.

According to this configuration, the electrical appliance improves the security of communication with a mobile terminal by performing authentication control when connecting with the mobile terminal.

A fifth aspect of the present invention is an electrical appliance in accordance with the above-mentionedaspectswhereintheelectricalappliance further comprises an encrypted communication section that directly connects the electrical appliance to the mobile terminal and encrypts communication data transmitted and received.

According to this configuration, the electrical appliance improves the security of communication performed upon direct connection with a mobile terminal by encrypting the communication data transmitted and received upon direct connection with the mobile terminal.

A sixth aspect of the present invention is a server apparatus employing a configuration having a call control section that calls an electrical appliance upon receiving an electrical appliance call request from a mobile terminal, a receiving section that receives a NAT router setting information and global IP address transmitted from the electrical appliance, and a notification section that notifies the mobile terminal that issued the electrical appliance call request of the NAT router setting information and global IP address received by the receiving section.

According to this configuration, the server apparatus receives the NAT router setting information and global IP address transmitted from an electrical appliance and notifies the mobile terminal that issued the electrical appliance call request of the received NAT router setting information and global IP address, thereby making it possible for the mobile terminal to directly connect to the electrical appliance using this information.

A seventh aspect of the present invention is a server apparatus in accordance with the above-mentioned aspects wherein the server apparatus further comprises an authentication control section that controls authentication when connecting with the mobile terminal.

According to this configuration, the server apparatus improves the security of communication with a mobile terminal by performing authentication control when connecting with the mobile terminal.

An eighth aspect of the present invention is a server apparatus in accordance with the above-mentioned aspects wherein the server apparatus further comprises an authentication control section that controls authentication when connecting with the electrical appliance.

According to this configuration, the server apparatus improves the security of communication with an electrical appliance by performing authentication control when connecting with the electrical appliance.

Aninth aspect of the present invention is amobile terminal employing a configuration having a call request transmission section that transmits to a server apparatus in which a session is established a connection request to an electrical appliance, a receiving section that receives from the server apparatus the NAT router setting information and global IP address notified to the server apparatus by the electrical appliance, and a connection control section that transmits a connection request to the electrical appliance using the NAT router setting information and global IP address received by the receiving section.

According to this configuration, the mobile terminal receives the NAT router setting information and global IP address from the server apparatus and transmits an electrical appliance connection request using the received NAT router setting information and global IP address, thereby making direct connection with the electrical appliance and communication without server apparatus possible.

A tenth aspectof the present invention is a mobile terminal in accordance with the above-mentioned aspects wherein the mobile terminal further comprises an authentication control section that controls authentication when connecting with the server apparatus.

According to this configuration, the mobile terminal improves the security of communication with the server apparatus by performing authentication control when connecting with the server apparatus.

An eleventh aspect of the present invention is a mobile terminal in accordance with the above-mentioned aspects wherein the mobile terminal further comprises an authentication control section that controls authentication when connecting with the electrical appliance.

According to this configuration, the mobile terminal improves the security of communication with an electrical appliance by performing authentication control when connecting with the electrical appliance.

A twelfth aspect of the present invention is a mobile terminal in accordance with the above-mentioned aspects wherein protocol used to establish a session with the electrical appliance is HTTP.

According to this configuration, the mobile terminal uses HTTP as the protocol for establishing a session with the electrical appliance, enabling the transmission and reception of HTML documents and image, audio, video, and other files associated with the documents between the mobile terminal and electrical appliance.

A thirteenth aspect of the present invention is a mobile terminal in accordance with the above-mentioned aspects wherein the mobile terminal further comprises an encrypted communication section that directly connects the mobile terminal to the electrical appliance and encrypts communication data transmitted and received.

According to this configuration, the mobile terminal improves the security of communication performed upon direct connection with an electrical appliance by encrypting the communication data transmitted and received upon direct connection with the electrical appliance.

A fourteenth aspect of the present invention is a mobile terminal in accordance with the above-mentioned aspects wherein the mobile terminal comprises a button, and connects with the server apparatus and transmits a connection request to the electrical appliance when the button is pressed.

According to this configuration, the mobile terminal directly connects with the electrical appliance by simply pressing a button based on timing desired by the user.

A fifteenth aspect of the present invention is a mobile terminal in accordance with the above-mentioned aspects wherein the mobile terminal comprises a common button for a first mode in which a function for connecting the mobile terminal to an electrical appliance operates and for a second mode in which a different function from the first mode operates, and connects with the server apparatus and transmits a connection request to the electrical appliance when the button is pressed in the first mode.

According to this configuration, the mobile terminal uses the same button for a plurality of modes, implementing a miniaturization of the mobile terminal size and direct connection with the electrical appliance by simply pressing the button based on timing desired by the user.

A sixteenth aspect of the present invention is a mobile terminal in accordance with the above-mentioned aspects wherein the mobile terminal comprises a clock and, connects with the server apparatus and transmits a connection request to the electrical appliance when the clock reaches a preset time.

According to this configuration, the mobile terminal automatically directly connects to the electrical appliance at a preset time.

A seventeenth aspect of the present invention is a mobile terminal in accordance with the above-mentioned aspects wherein the mobile terminal comprises a mail receiving section that receives mails and connects to the server apparatus and transmits a connection request to the electrical appliance upon receiving a specific mail.

According to this configuration, the mobile terminal automatically directly connects to the electrical appliance by simply receiving a specific mail.

An eighteenth aspect of the present invention is a mobile terminal in accordance with the above-mentioned aspects wherein the mobile terminal comprises an incoming call control section that controls incoming calls and, connects to the server apparatus and transmits a connection request to the electrical appliance upon receiving an incoming call from a specific source.

According to this configuration, the mobile terminal automatically directly connects to the electrical appliance by simply receiving an incoming call from a specific source.

A nineteenth aspect of the present invention is a communication method comprising a NAT control step wherein an electrical appliance that receives a call request from a mobile terminal ensures arrival of a packet addressed to the electrical appliance by controlling a NAT router that interconverts a global IP address and private address and obtains NAT router setting information and global IP address, a NAT setting information notification step wherein a server apparatus on the Internet is notified of the NAT router setting information and global IP address obtained by the NAT control step, a notification step wherein the server apparatus notifies the mobile terminal that issued the electrical appliance call request of the NAT router setting information and global IP address, and a connection control step wherein the mobile terminal transmits a connection request to the electrical appliance using the NAT router setting information and global IP address.

According to this method, even if the address assigned to the electrical appliance by the NAT router dynamically changes, the electrical appliance ensures the arrival of a packet addressed to the electrical appliance by controlling the NAT router, obtains the NAT router setting information and global IP address, and notifies a server apparatus on the Internet of the NAT router setting information and global IP address, thereby making it possible for a mobile terminal that obtains via a server apparatus the NAT router setting information and global IP address to directly connect to the electrical appliance using this information and thus perform communication without server apparatus.

A twentieth aspect of the present invention is a communication system comprising an electrical appliance having a NAT control section that ensures, upon receiving a call request from a mobile terminal, arrival of a packet addressed to the electrical appliance by controlling a NAT router that interconverts the global IP address and private address, and obtains the NAT router setting information and global IP address, and a NAT setting information notification section that notifies a server apparatus on the Internet of the NAT router setting information and global IP address obtained by the NAT control section, a server apparatus having a first receiving section that receives the NAT router setting information and global IP address notified by the electrical appliance, and a notification section that notifies the mobile terminal that issued the electrical appliance call request of the NAT router setting information and global IP address received by the first receiving section, and a mobile terminal having a second receiving section that receives from the server apparatus the NAT router setting information and global IP address notified by the server apparatus, and a connection control section that transmits a connection request to the electrical appliance using the NAT router setting information and global IP address received by the second receiving section.

According to this configuration, even if the address assigned to the electrical appliance by the NAT router dynamically changes, the electrical appliance ensures the arrival of a packet addressed to the electrical appliance by controlling the NAT router, obtains the NAT router setting information and global IP address, and notifies a server apparatus on the Internet of the NAT router setting information and global IP address, thereby making it possible for a mobile terminal that obtains via a server apparatus the NAT router setting information and global IP address to directly connect to the electrical appliance using this information and thus perform communication without server apparatus.

A twenty-first aspect of the present invention is a program that makes the computer provided in an electrical appliance function as a NAT control section that ensures arrival of a packet addressed to the electrical appliance by controlling a NAT router that interconverts a global IP address and private address and obtains NAT router setting information and global IP address, and a NAT setting information notification section that notifies a server apparatus on the Internet of the NAT router setting information and global IP address obtained by the NAT control section.

According to this program, even if the address assigned to the electrical appliance by the NAT router dynamically changes, the electrical appliance ensures the arrival of a packet addressed to the electrical appliance by controlling the NAT router, obtains the NAT router setting information and global IP address, and notifies a server apparatus on the Internet of the NAT router setting information and global IP address, thereby making it possible for a mobile terminal that obtains via a server apparatus the NAT router setting information and global IP address to directly connect to the electrical appliance using this information.

A twenty-second aspect of the present invention is a program that makes the computer provided in a server apparatus function as a call control section that calls an electrical appliance upon receiving an electrical appliance call request from a mobile terminal, a receiving section that receives a NAT router setting information and global IP address transmitted from the electrical appliance, and a notification section that notifies the mobile terminal that issued the electrical appliance call request of the NAT router setting information and global IP address received by the receiving section.

According to this program, the server apparatus receives the NAT router setting information and global IP address transmitted from the electrical appliance and notifies the mobile terminal that issued the electrical appliance call request of the received NAT router setting information and global IP address, thereby making it possible for the mobile terminal to directly connect to the electrical appliance using this information.

A twenty-third aspect of the present invention is a program that makes the computer provided in a mobile terminal function as a call request transmission section that transmits an electrical appliance connection request to a server apparatus in which a session is established, a receiving section that receives from the server apparatus the NAT router setting information and global IP address notified to the server apparatus by the electrical appliance, and a connection control section that transmits a connection request to the electrical appliance using the NAT router setting information and global IP address received by the receiving section.

According to this program, the mobile terminal receives the NAT router setting information and global IP address from the server apparatus and transmits an electrical appliance connection request using the received NAT router setting information and global IP address, thereby making direct connection with the electrical appliance and communication without server apparatus mediation possible.

The present application is based on Japanese Patent Application No.2004-275948, filed on September 22, 2004, the entire content of which is expressly incorporated by reference herein.

### Industrial Applicability

The electrical appliance, server apparatus, mobile terminal, communication system, communication method, and program according to the present invention has the effect of reducing the server processing load and reducing the used band of the access line the server connects to the Internet, and is applicable, for example, to Internet appliances and mobile telephones.

## Claims

1. An electrical appliance having an Internet connection function, the electrical appliance comprising:
a NAT control section that ensures arrival of a packet addressed to the electrical appliance by controlling a NAT router that interconverts a global IP address and private address, and obtains NAT router setting information and global IP address; and
a NAT setting information notification section that notifies a server apparatus on the Internet of the NAT router setting information and global IP address obtained by the NAT control section.

2. An electrical appliance having an Internet connection function, the electrical appliance comprising:
a call reception section that receives call requests from a server apparatus on the Internet;
a NAT control section that ensures, upon receiving a call request by the call reception section, arrival of a packet addressed to the electrical appliance by controlling a NAT router that interconverts a global IP address and private address, and obtains NAT router setting information and global IP address; and
a NAT setting information notification section that notifies the server apparatus of the NAT router setting information and global IP address obtained by the NAT control section.

3. The electrical appliance according to claim 1, further comprising an authentication control section that controls authentication when connecting with the server apparatus.

4. The electrical appliance according to claim 1, further comprising an authentication control section that controls authentication when connecting with a mobile terminal.

5. The electrical appliance according to claim 1, further comprising an encrypted communication section that directly connects the electrical appliance to the mobile terminal and encrypts the communication data transmitted and received.

6. A server apparatus comprising:
a call control section that calls an electrical appliance upon receiving an electrical appliance call request from a mobile terminal;
a receiving section that receives a NAT router setting information and global IP address transmitted from the electrical appliance; and
a notification section that notifies the mobile terminal that issued the electrical appliance call request of the NAT router setting information and global IP address received by the receiving section.

7. The server apparatus according to claim 6, further comprising an authentication control section that controls authentication when connecting with the mobile terminal.

8. The server apparatus according to claim 6, further comprising an authentication control section that controls authentication when connecting with the electrical appliance.

9. A mobile terminal comprising:
a call request transmission section that transmits to a server apparatus in which a session is established a connection request to an electrical appliance;
a receiving section that receives from the server apparatus the NAT router setting information and global IP address notified to the server apparatus by the electrical appliance; and
a connection control section that transmits a connection request to the electrical appliance using the NAT router setting information and global IP address received by the receiving section.

10. The mobile terminal according to claim 9, further comprising an authentication control section that controls authentication when connecting with the server apparatus.

11. The mobile terminal according to claim 9, further comprising an authentication control section that controls authentication when connecting with the electrical appliance.

12. The mobile terminal according to claim 9, wherein protocol used to establish a session with the electrical appliance is HTTP.

13. The mobile terminal according to claim 9, further comprising an encrypted communication section that directly connects the mobile terminal to the electrical appliance and encrypts the communication data transmitted and received.

14. The mobile terminal according to claim 9, further comprising a button, wherein the mobile terminal connects with the server apparatus and transmits a connection request to the electrical appliance when the button is pressed.

15. The mobile terminal according to claim 9, further comprising a common button for a first mode in which a function for connecting the mobile terminal to the electrical appliance operates and for a second mode in which a different function from the first mode operates, wherein the mobile terminal connects with the server apparatus and transmits a connection request to the electrical appliance when the button is pressed in the first mode.

16. The mobile terminal according to claim 9, further comprising a clock, wherein the mobile terminal connects with the server apparatus and transmits a connection request to the electrical appliance when the clock reaches a preset time.

17. The mobile terminal according to claim 9, further comprising a mail receiving section that receives mails, wherein the mail receiving section connects the mobile terminal with the server apparatus and transmits a connection request to the electrical appliance upon receiving a specific mail.

18. The mobile terminal according to claim 9, further comprising an incoming call control section that controls incoming calls, wherein the incoming call control section connects the mobile terminal to the server apparatus and transmits a connection request to the electrical appliance upon receiving an incoming call from a specific source.

19. A communication method comprising:
a NAT control step wherein an electrical appliance that receives a call request from a mobile terminal ensures arrival of a packet addressed to the electrical appliance by controlling a NAT router that interconverts a global IP address and private address, and obtains NAT router setting information and global IP address;
a NAT setting information notification step wherein a server apparatus on the Internet is notified of the NAT router setting information and global IP address obtained in the NAT control step;
a notification step wherein the server apparatus notifies the mobile terminal that issued the electrical appliance call request of the NAT router setting information and global IP address; and
a connection control step wherein the mobile terminal transmits a connection request to the electrical appliance using the NAT router setting information and global IP address.

20. A communication system comprising:
an electrical appliance comprising a NAT control section that ensures, upon receiving a call request from a mobile terminal, arrival of a packet addressed to the electrical appliance by controlling a NAT router that interconverts a global IP address and private address, and obtains the NAT router setting information and global IP address, and a NAT setting information notification section that notifies a server apparatus on the Internet of the NAT router setting information and global IP address obtained by the NAT control section;
a server apparatus comprising a first receiving section that receives the NAT router setting information and global IP address notified by the electrical appliance, and a notification section that notifies the mobile terminal that issued the electrical appliance call request of the NAT router setting information and global IP address received by the first receiving section; and
a mobile terminal comprising a second receiving section that receives from the server apparatus the NAT router setting information and global IP address notified by the server apparatus, and a connection control section that transmits a connection request to the electrical appliance using the NAT router setting information and global IP address received by the second receiving section.

21. A program for making a computer provided in an electrical appliance function as:
a NAT control section that ensures arrival of a packet addressed to the electrical appliance by controlling a NAT router that interconverts a global IP address and private address, and obtains NAT router setting information and global IP address; and
a NAT setting information notification section that notifies a server apparatus on the Internet of the NAT router setting information and global IP address obtained by the NAT control section.

22. A program for making a computer provided in a server apparatus function as:
a call control section that calls an electrical appliance upon receiving an electrical appliance call request from a mobile terminal;
a receiving section that receives a NAT router setting information and global IP address transmitted from the electrical appliance; and
a notification section that notifies the mobile terminal that issued the electrical appliance call request of the NAT router setting information and global IP address received by the receiving section.

23. A program for making a computer provided in a mobile terminal function as:
a call request transmission section that transmits an electrical appliance connection request to a server apparatus in which a session is established;
a receiving section that receives from the server apparatus the NAT router setting information and global IP address notified to the server apparatus by the electrical appliance; and
a connection control section that transmits a connection request to the electrical appliance using the NAT router setting information and global IP address received by the receiving section.
